# EUROPEAN PATENT APPLICATION

(11) **EP 4 832 172 A1**
(43) Date of publication of application: **28.10.2026**
(21) Application number: 24907982.3
(22) Date of filing: 16.12.2024
(51) Int. Cl.: H01M 10/655, H01M 10/613, H01M 50/204, C08L 83/04, C08K 3/22, C08G 77/12, C08G 77/20

(54) **GAP FILLER COMPOSITION AND BATTERY PACK**

(30) Priority: 22.12.2023 KR 20230190144
(71) Applicant: Dongwoo Fine-Chem Co., Ltd., Iksan-si, Jeonbuk-do 54631 (KR)
(72) Inventor: KIM, Hyun Woo, Iksan-si, Jeonbuk-do 54631 (KR); SHIN, Woo Jun, Iksan-si, Jeonbuk-do 54631 (KR); SIM, Min Kyu, Iksan-si, Jeonbuk-do 54631 (KR)
(74) Representative: dompatent
(86) International application number: PCT/KR2024/020412
(87) International publication number: WO 2025/135699

(57) **Abstract**

A gap filler composition according to embodiments of the present invention comprises a siloxane-based resin, a filler containing thermally conductive inorganic particles, hollow particles, and graphite particles, a catalyst, and an amino-silicone-based dispersant. Provided is a gap filler composition that possesses low specific gravity, high thermal conductivity, and enhanced viscosity stability by utilizing the hollow particles, graphite particles, and amino-silicon-based dispersant. A battery pack utilizing the gap filler composition is provided.

## Description

### [TECHNICAL FIELD]

The present invention relates to a gap filler composition and a battery pack. More particularly, the present invention relates to a gap filler composition including a siloxane-based resin and a battery pack including a gap filler formed using the same.

### [BACKGROUND ART]

A secondary battery is a battery capable of being repeatedly charged and discharged, and is widely used as a power source for portable electronic devices such as a mobile phones a laptop PC, or the like. For example, a lithium secondary battery has high operating voltage, energy density and rate properties, and has recently been used as a power source for an electric vehicle.

For example, a battery cell is defined by a lithium secondary battery, and a plurality of the battery cells are gathered to form a battery module. The battery modules may be gathered to form a high-capacity/high-power battery pack applicable to an electric vehicle.

To apply the battery pack to a vehicle such as an electric vehicle, the battery pack may be seated on a battery support plate, and the battery pack may be fixed using a gap filler composition.

The process of applying the gap filler composition may be included in an entire production platform of the electric vehicle. Thus, in order to maintain automobile process efficiency/reliability, a gap filler composition capable of being cured within a predetermined time to provide desired physical properties may be needed.

A design of a composition having improved thermal conductivity for dissipating heat generated by repeated charging/discharging of the battery pack while having appropriate absorption/elasticity against external impact and being capable of forming a gap filler having a low weight/specific gravity is needed.

For example, Korean Registered Patent Publication No. 10-2402503 discloses a battery pack structure including a battery module and a gap filler. However, specific physical properties and composition of the gap filler are not disclosed.

### CONTENTS OF THE INVENTION

### [Technical Objective]

An object of the present invention is to provide a gap filler composition providing improved thermal properties and mechanical properties.

An objective of the present invention is to provide a battery pack including a gap filler formed of the gap filler composition.

### [Means for Resolving the Objective]

1. A gap filler composition, including: a siloxane-based resin; a filler comprising thermally conductive inorganic particles, hollow particles and graphite particles; a catalyst; and an amino-silicon-based dispersant.
2. The gap filler composition of the above 1, wherein an average particle diameter of the hollow particles is in a range from 1 µm to 60 µm.
3. The gap filler composition of the above 1, wherein an average particle diameter of the graphite particles is in a range from 10 µm to 150 µm.
4. The gap filler composition of the above 1, wherein the hollow particles include hollow silica particles.
5. The gap filler composition of the above 1, wherein a content of the hollow particles is in a range from 1 wt% to 5 wt% based on a total weight of the composition.
6. The gap filler composition of the above 1, wherein the graphite particles include spherical graphite.
7. The gap filler composition of the above 1, wherein a content of the graphite particles is in a range from 1 wt% to 16 wt% based on a total weight of the composition.
8. The gap filler composition of the above 1, wherein a content of the thermally conductive inorganic particles is in a range from 75 wt% to 95 wt% based on a total weight of the composition.
9. The gap filler composition of the above 1, wherein a content of the amino-silicon-based dispersant is in a range from 0.1 wt% to 3 wt% based on a total weight of the composition.
10. The gap filler composition of the above 1, wherein the siloxane-based resin includes a first siloxane-based resin including an unsaturated end group and a second siloxane-based resin including a saturated end group.
11. The gap filler composition of the above 10, wherein the siloxane-based resin further includes a cross-linking agent including a siloxane-based resin having a methyl group bonded to each of silicon atoms at both terminal ends.
12. The gap filler composition of the above 1, the composition has a specific gravity less than 2.
13. The gap filler composition of the above 1, the composition has a viscosity of 850 Pa·s or less at 25 °C.
14. A battery pack, including: a plurality of battery modules; a support plate; and a gap filler formed using the gap filler composition of claim 1 between the battery modules and the support plate.

### [Effects of the Invention]

A gap filler composition according to example embodiments of the present invention may include hollow particles as a filler. Additionally, the filler may include graphite particles. A specific gravity of the gap filler composition may be reduced by the hollow particles, and A thermal conductivity of the gap filler composition may be increased by the graphite particles.

The gap filler composition according to example embodiments of the present invention may include an amino-silicon-based dispersant. The amino-silicon-based dispersant may increase dispersibility between the filler and the siloxane-based resin, and may improve storage stability of the composition.

In example embodiments, the hollow particles and the graphite particles each having an average particle size within a predetermined range may be used. In some embodiments, hollow silica particles may be used as the hollow particles. The particle size within the predetermined range may be satisfied, so that a low specific gravity and a high thermal conductivity of the gap filler composition may both be achieved.

Accordingly, the gap filler composition may be applied to a vehicle battery pack to reduce a weight of the battery pack while promoting rapid heat dissipation even in a temperature increase resulting from repeated charging and discharging of the battery pack.

### [Brief Descriptions of the Drawings]

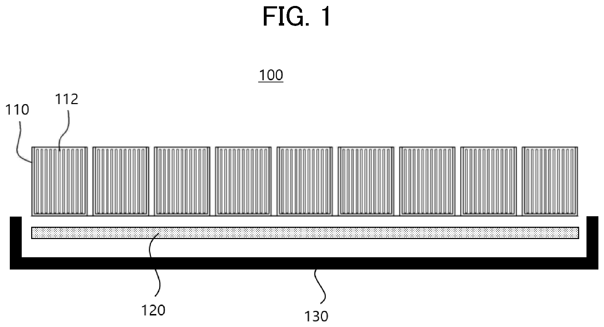

FIG. 1 is a schematic cross-sectional view illustrating a battery pack according to example embodiments.

### [Implementation for Practicing the Invention]

According to embodiments of the present invention, a gap filler composition including a siloxane-based resin, a catalyst and a filler, and having improved curing properties and storage stability is provided. Further, according to embodiments of the present invention, a battery pack using the gap filler composition is provided.

### <Gap filler composition>

A gap filler composition according to embodiments may include a siloxane-based resin, a catalyst and a filler.

The siloxane-based resin may be provided as a base component providing curability of the gap filler composition. In example embodiments, the siloxane-based resin may include a first siloxane-based resin and a second siloxane-based resin.

The first siloxane-based resin may be a siloxane-based resin containing a crosslinkable end group. In example embodiments, the first siloxane-based resin may be a siloxane-based resin containing an unsaturated end group (e.g., a vinyl group) at both ends of a molecule.

For example, the first siloxane-based resin may include a compound represented by Chemical Formula 1.

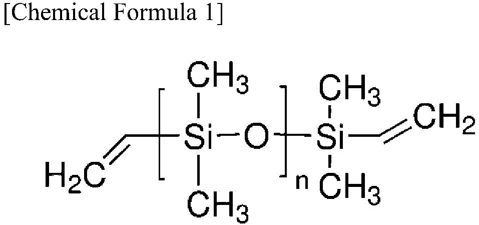

In some embodiments, the first siloxane-based resin may have a viscosity in a range from 50 cps to 150,000 cps, from 70 cps to 1,500 cps, from 100 cps to 1,500 cps, from 200 cps to 1,500 cps, or from 300 cps to 1,200 cps at 25 °C.

In the above viscosity range, curing properties and curing speed as will be described later may be more easily achieved, and appropriate coating properties and flowability of the gap filler composition may be achieved.

In some embodiments, a weight average molecular weight of the first siloxane-based resin may be adjusted in consideration of the viscosity in the above-described range. For example, the first siloxane-based resin may have a weight average molecular weight in a range from 1,500 to 50,000, from 10,000 to 50,000, from 10,000 to 30,000, or from 10,000 to 25,000.

In Chemical Formula 1, n may be adjusted in consideration of the viscosity range. For example, n may be a natural number in a range from 40 to 800, from 80 to 800, from 100 to 800, from 130 to 700, or from 150 to 700.

A content of the first siloxane-based resin (e.g., a solid content) may be in a range from 1.5 wt% to 13 wt% based on a total weight of the gap filler composition. In an embodiment, the content of the first siloxane-based resin may be in a range from 5 wt% to 13 wt%, from 7 wt% to 12 wt%, or from 7.5 wt% to 10 wt%. In the above content range, a gap filler having appropriate hardness and elasticity may be effectively formed.

The second siloxane-based resin may be a siloxane-based resin having a structure different from that of the first siloxane-based resin.

The second siloxane-based resin may be included as a chain extending agent or a chain adjusting agent of the gap filler composition, and thus overall viscosity, flowability, cross-linking property, etc., of the composition may be controlled.

In example embodiments, the second siloxane-based resin may be a siloxane-based resin in which a saturated group (e.g., a hydrogen atom) is bonded to silicon atoms at both ends.

For example, the second siloxane-based resin may include a compound represented by Chemical Formula 2.

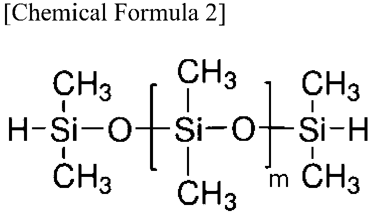

In some embodiments, the second siloxane-based resin may have a viscosity in a range from 10 cps to 1,500 cps, from 100 cps to 1,500 cps, from 200 cps to 1,500 cps, or from 300 cps to 1,200 cps at 25 °C.

A weight average molecular weight of the second siloxane resin may be adjusted according to the viscosity range. For example, the second siloxane-based resin may have a weight average molecular weight in a range from 500 to 50,000, from 10,000 to 50,000, from 10,000 to 30,000, or from 10,000 to 25,000. Within the molecular weight and viscosity range, curing properties and curing speed to be described later may be more easily achieved, and appropriate coating properties and flowability of the gap filler composition may be achieved.

In Chemical Formula 2, m may be adjusted in consideration of the molecular weight and viscosity range. For example, m may be a natural number in a range from 10 to 700, from 20 to 700, from 30 to 700, from 50 to 700, from 100 to 700, or from 130 to 700.

A content of the second siloxane-based resin (e.g., a solid content) may be in a range from 0.5 wt% to 10 wt% based on the total weight of the gap filler composition. In an embodiment, the content of the second siloxane resin may be in a range from 2 wt% to 10 wt%, from 2 wt% to 7 wt%, or from 2 wt% to 5 wt%. In the above content range, the gap filler having appropriate hardness and elasticity may be effectively formed.

In example embodiments, a content of the siloxane-based resin based on the total weight (e.g., a solid content) of the gap filler composition may be in a range from 2 wt% to 23 wt%. In an embodiment, the content of the siloxane-based resin may be in a range from 7 wt% to 23 wt%, from 7 wt% to 20 wt%, from 10 wt% to 15 wt%, or from 10 wt% to 14 wt%.

In some embodiments, the gap filler composition may further include a cross-linking agent. The cross-linking agent may be a siloxane-based resin having a relatively low viscosity and having a methyl group bonded to silicon atoms at both ends. For example, the cross-linking agent may include a compound represented by Chemical Formula 3.

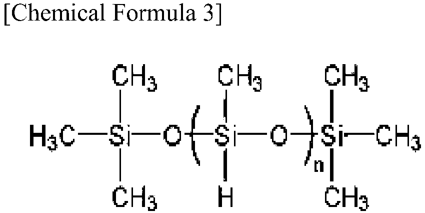

In an embodiment, a viscosity of the cross-linking agent may be smaller than that of the second siloxane-based resin. In an embodiment, the viscosity of the cross-linking agent may be less than 100 cps at 25 °C, and n in Chemical Formula 3 may be adjusted in consideration of the viscosity range.

The cross-linking agent may be included in a cross-linking composition as will be described later. A content of the cross-linking agent based on the total weight of the gap filler composition may be in a range from 0.1 wt% to 0.5 wt%.

The catalyst may be used as a controller for promoting cross-linking and/or interaction of the siloxane-based resin of the gap filler composition to obtain curing properties and curing rate as will be described below.

In some embodiments, the catalyst may include a compound or complex of Pt(II), Pt(IV), and/or Pt(0). For example, the catalyst may include platinum chloride, Ashby's catalyst, or Karstedt catalyst.

In example embodiments, the catalyst may include an organic-inorganic hybrid catalyst containing platinum and silicon. In one embodiment, the platinum may be Pt(0) having an oxidation number of 0.

The catalyst may include a Pt atom and a Si₂O group (-Si-O-Si-) in a molecule. For example, silicon (Si) atoms of the Si₂O group may be bonded to a vinyl group, and the Pt atom may be coordinated or captured by the vinyl group.

In example embodiments, a weight ratio of platinum (Pt) to the silicon (Si) atom and an oxygen atom (O) in the catalyst may be in a range from 1.2 to 2.0, from 1.2 to 1.5, or from 1.25 to 1.45.

An appropriate activity of the catalyst through the Pt atom may be maintained by using the catalyst in the weight ratio range. Thus, the curing characteristics and curing rate of the gap filler composition described below may be easily implemented using the catalyst.

For example, the catalyst may include a unit represented by Chemical Formula 4 below in a molecule thereof.

[Chemical Formula 4] Pt · [(CH₂=CH(CH₃)₂Si)O]

In some embodiments, a content of the catalyst based on a total weight of the composition may be in a range from 0.01 wt% to 0.05 wt%. In the above range, an appropriate curing speed may be implemented while preventing an excessive increase in hardness/elasticity of the gap filler.

The filler may be included as a component that may increase thermal conductivity of the gap filler to improve heat dissipation properties of the battery pack.

The filler may include thermally conductive inorganic particles. Examples of the thermally conductive inorganic particles include aluminum hydroxide (Al(OH)₃)_{,} magnesium hydroxide (Mg(OH)₂)_{,} calcium hydroxide (Ca(OH)₂)_{,} hydromagnesite (Mg₅(CO₃₎₄(OH)₂·4H₂O), magnesia, alumina, AlN (aluminum nitride), boron nitride (BN), silicon nitride, SiC, ZnO, BeO, etc.

In example embodiments, the filler may include aluminum hydroxide (Al(OH)₃) particles. The aluminum hydroxide particles may have a relatively low specific gravity compared to that of alumina particles to lower a total specific gravity of the gap filler composition, and may improve filling properties and flowability.

In some embodiments, the gap filler composition may not include alumina particles. In an embodiment, the thermally conductive inorganic particles may substantially consist of the aluminum hydroxide particles.

In some embodiments, the thermally conductive inorganic particles or the aluminum hydroxide particles may be non-surface-treated particles. For example, the thermally conductive inorganic particles or the aluminum hydroxide particles may be bare particles that are not surface-treated with an alkyl group or an alkylsilane group. Thus, the specific gravity reduction effect due to the use of the aluminum hydroxide particles may be implemented more effectively. For example, the thermally conductive inorganic particles may not be surface-treated with an alkylsilane such as hexyltrimethoxysilane.

The thermally conductive inorganic particles may be included in the largest amount (wt%) of the gap filler composition. Thus, heat conduction properties of the gap filler composition may be sufficiently increased.

A content of the thermally conductive inorganic particles based on the total weight of the composition may be in a range from 70 wt% to 95 wt%, or from 75 wt% to 95 wt%. In some embodiments, the content of the thermally conductive inorganic particles may be in a range from 75 wt% to 90 wt%, from 80 wt% to 90 wt%, or from 82 wt% to 88 wt%.

In example embodiments, the filler may further include hollow particles. The hollow particles may be added so that thermal conductivity may be maintained or enhanced while further reducing the specific gravity of the gap filler composition.

Examples of the hollow particles include hollow organic particles such as acrylic particles such as PMMA (poly(methylmethacrylate)), epoxy particles, nylon particles, styrene particles, styrene/vinyl copolymer particles, etc.; or hollow inorganic particles such as silica particles, indium oxide particles, tin oxide particles, zirconium oxide particles, zinc oxide particles, titania particles, etc.

In some embodiments, an average particle diameter (D50) of the hollow particles may be in a range from 0.01 µm to 100 µm. The average particle diameter of the hollow particles may be greater than 0.2 µm and less than 80 µm, from 1 µm to 80 µm, or from 1 µm to 60 µm.

The average particle size of the hollow particles may be within the above range, so that the thermal conductivity may be increased without an excessive increase in the viscosity of the gap filler composition. For example, if the average particle diameter of the hollow particles is less than the above range, a volume of the hollow particle in the composition may be decreased even in the same content of the hollow particles to cause an viscosity increase. If the average particle diameter of the hollow particles exceeds the above range, the volume of the hollow particles in the composition may be increased, to decrease the thermal conductivity of the composition.

In an embodiment, the hollow inorganic particles may be used as the hollow particles. For example, hollow silica particles may be used.

In an embodiment, particles having a density in a range from 0.05 g/cc to 0.8 g/cc may be used as the hollow particles. In this range, the effect of reducing the specific gravity by the use of the hollow particles may be sufficiently realized. The density of the hollow particles may be in a range from 0.1 g/cc to 0.8 g/cc, from 0.1 g/cc to 0.5 g/cc, or from 0.2 g/cc to 0.4 g/cc.

In some embodiments, a content of the hollow particles may be in a range from 0.1 wt% to 5 wt%, from 0.5 wt% to 5 wt%, from 1 wt% to 5 wt%, or from 1 wt% to 4 wt% based on the total weight of the composition. In the above range, the specific gravity of the composition may be effectively lowered without excessively reducing the thermal conductivity of the gap filler composition.

The filler may contain graphite particles. The graphite particles may be contained, so that the thermal conductivity may be enhanced while maintaining the reduced specific gravity of the gap filler composition.

Examples of the graphite particles include natural graphite, artificial graphite, activated carbon, carbon black, fullerene, carbon nanotubes, graphene oxide, or the like.

In example embodiments, natural graphite may be used as the graphite particles. The natural graphite may include a flake graphite, an expanded graphite, and/or a spherical graphite.

In some embodiments, the spherical graphite may be used as the graphite particles.

The graphite particles may include the spherical graphite, so that a change ratio in viscosity may be improved while increasing the thermal conductivity of the gap filler composition, and thus storage stability of the gap filler composition may be improved.

In some embodiments, the average particle diameter (D50) of the spherical graphite may be in a range from 0.01 µm to 500 µm, greater than 2 µm and less than 200 µm, from 10 µm to 150 µm, or from 10 µm to 100 µm.

In the above range of the average particle diameter of the graphite particles, the thermal conductivity and flowability may be improved while maintaining the reduced specific gravity of the gap filler composition. If the average particle diameter is less than the above range, the thermal conductivity may not be improved and flowability may be reduced. If the average particle diameter exceeds the above range, mixing between the particles may not be easily implemented due to a difference in average particle sizes between the hollow particles and the graphite particles to result in uneven distribution of the particles in the composition. Further, a time required for uniform mixing of the particles increases to cause degradation of production efficiency.

In an embodiment, a content of the graphite particles may be 0.5 wt% to 16 wt% based on the total weight of the composition. The content of the graphite particles may be in a range from 1 wt% to 16wt%, from 1 wt% to 12 wt%, or from 1 wt% to 8 wt%. In the above range, the thermal conductivity of the composition may be effectively increased without excessively increasing the viscosity of the gap filler composition.

In example embodiments, the average particle diameter of the hollow particles may be smaller than the average particle diameter of the graphite particles. The average particle diameter of the hollow particles may be larger than the average particle diameter of the graphite particles. The average particle diameter of the hollow particles and the average particle diameter of the graphite particles may be adjusted in consideration of mixing compatibility of the particles.

The average particle size of the hollow particles and the average particle size of the graphite particles may be controlled, so that low specific gravity and high thermal conductivity may both be achieved. Additionally, the hollow particles and the graphite particles may be uniformly mixed with each other to improve flowability of the gap filler composition.

The average particle diameter of the hollow particles and the average particle diameter of the graphite particles may be measured by a suitable method in the related field, and may be values measured from, e.g., a laser scattering particle size analyzer, an image observed by a transmission electron microscope (TEM), an image observed by a scanning electron microscope (SEM), etc. For example, the average particle size may be measured by a laser diffraction, a dynamic light scattering, etc.

The average particle size may refer to a diameter (D50) of the particle at which a cumulative volume in the particle size distribution is 50 vol%.

The gap filler composition according to embodiments may further include an amino-silicon-based dispersant.

In some embodiments, the amino-silicon-based dispersant may include an amino-silicon oil including a siloxane unit and an amino group.

For example, the amino-silicon-based dispersant may include a siloxane unit represented by General Formula 1 below, and may include an amino-containing group represented by General Formula 2 below. The amino-containing group may be bonded to a silicon atom.

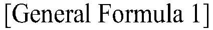

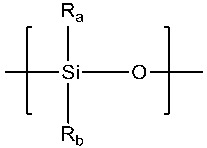

In General Formula 1, Rₐ and R_{b} may each be hydrogen, a C₁-C₅ alkyl group, or a group represented by General Formula 2.

[General formula 2] -ALK₁-NH-ALK₂-NH-R_{c}

In General Formula 1, R_{c} may be hydrogen or a C₁-C₅ alkyl group. ALK₁ and ALK₂ may each independently be a C₁-C₆ alkylene group.

For example, the siloxane unit represented by General Formula 1 may be included as a repeating unit of the amino-silicon-based dispersant. The amino-containing group represented by General Formula 2 may be bonded as Rₐ or R_{b} of at least one siloxane unit among the repeated siloxane units.

In an embodiment, the amino-silicon-based dispersant may include a terminal amine group (-NH₂)_{.} An amine group may be included at a terminal end of the amino-silicon-based dispersant to improve dispersibility of aluminum hydroxide.

The amino-silicon-based dispersant may be included, so that sufficient dispersibility may be achieved even when the non-surface-treated thermally conductive inorganic particles are used. Thus, uniform thermal conductivity may be implemented throughout the gap filler while reducing the specific gravity of the composition.

Additionally, the dispersant containing the siloxane units may be used to stabilize the filler between an interface between the siloxane-based resin and the filler described above. Thus, aggregation of the filler may be prevented, viscosity of the composition may be stably maintained, and flowability may be improved.

In some embodiments, a dispersant containing a hydroxyl group or an epoxy group may not be used as the dispersant. Thus, side reactions caused by the above hydroxyl group or epoxy group between the fillers and the siloxane-based resins may be prevented, and composition dispersibility and heat conduction uniformity may be improved.

In some embodiments, a content of the amino-silicon-based dispersant based on the total weight of the composition may be in a range from 0.1 wt% to 3 wt%. In an embodiment, the content of the amino-silicon-based dispersant may be in a range from 0.1 wt% to 0.5 wt%, or from 0.2 wt% to 0.4 wt%. In the range, dispersibility of the aluminum hydroxide particles may be enhanced, and increase in the specific gravity of the composition may be prevented.

In some embodiments, an amine value defined as an amount of a 0.1 N HCl titer required to neutralize 10 g of the amino-silicon-based dispersant may be in a range from 1 mgKOH/g to 80 mgKOH/g, from 10 mgKOH/g to 60 mgKOH/g, or from 20 mgKOH/g to 50 mgKOH/g. In the above range, the above-described filler stabilization effect may be effectively implemented.

In some embodiments, the gap filler composition may further include an additive for enhancing conductivity and curability of the composition within a range that does not inhibit the action of the siloxane-based resin, the catalyst, and the filler. For example, the additive may include a flame retardant, a surfactant, a silane coupling agent, a colorant (e.g., a pigment), an antioxidant, a plasticizer, or the like. The additive may be included in the composition in a residual amount or an extra amount excluding the siloxane-based resin, the catalyst, and the filler as described above.

Examples of the flame retardant include an organic flame retardant such as melamine cyanurate, an inorganic flame retardants such as magnesium hydroxide, or the like. In an embodiment, a liquid flame retardant material (triethyl phosphate (TEP) or tris (1,3-chloro-2-propyl)phosphate (TCPP), etc.) may be used.

Examples of the surfactant may include polyethylene glycol, polypropylene glycol, oleic acid ethoxylate, alkylphenol ethoxylate, a copolymer of ethylene oxide and propylene oxide, a silicon-based polymer, or the like.

Examples of the above silane coupling agent include γ-glycidoxypropyltrimethoxysilane, γ-glycidoxypropylmethyldiethoxysilane, γ-glycidoxypropyltriethoxysilane, 3-mercaptopropyltrimethoxysilane, vinyltrimethoxysilane, vinyltriethoxysilane, γ-methacryloxypropyltrimethoxysilane, γ-methacryloxypropyltriethoxysilane, γ-aminopropyltrimethoxysilane, γ-aminopropyltriethoxysilane, 3-isocyanatepropyltriethoxysilane, γ-acetoacetatepropyltrimethoxysilane, etc.

A phenol-based compound, a quinone-based compound, an amine-based compound, a phosphorus-based compound, a phosphite-based compound, a thioether-based compound, or the like, may be used as the antioxidant.

Examples of the plasticizer include tetraethylene glycol monobutyl ether (3,6,9,12-tetraoxahexadecanol), triethylene glycol monobutyl ether (3,6,9-trioxatridecanol), diethylene glycol monobutyl ether (2-(2-butoxyethoxy)ethanol), propylene glycol monobutyl ether, ethylene glycol monobutyl ether, propylene glycol monomethyl ether (1-methoxy-2-propanol), propylene glycol monomethyl ether acetate, polyethylene glycol, glycerin, or the like.

In example embodiments, a specific gravity of the gap filler composition may be 3 or less, or 2.5 or less. In some embodiments, the specific gravity of the gap filler composition may be in a range from 1.5 to 2 or from 1.5 to 1.9.

The specific gravity is a value measured as a ratio relative to a density of water at 4 °C under 1 atmosphere.

In the specific gravity, the gap filler having improved mechanical stability may be obtained without increasing a weight of the battery pack.

In embodiments, the viscosity of the gap filler composition may be 1,000 Pa·s or less, 900 Pa·s or less, or from 200 Pa·s to 850 Pa·s. The viscosity may be a value measured at 25 °C.

The viscosity may refer to a viscosity in a day (within 24 hours) when the gap filler composition is prepared.

Stability of the gap filler composition may be achieved in the viscosity range, and thus long-term storage may be possible.

The gap filler composition may be prepared as a two-component composition. For example, the gap filler composition may be prepared by separately preparing a main composition and a cross-linking composition, and then mixing the main composition and the cross-linking composition.

According to embodiments of the present invention, the first siloxane resin may be commonly included in the main composition and the cross-linking composition.

In example embodiments, the gap filler composition may be prepared as a two-component composition. For example, the gap filler composition may be prepared by separately preparing a main composition and a cross-linking composition, and then mixing the main composition and the cross-linking composition.

The main composition may include the first siloxane-based resin, the catalyst and the filler. The cross-linking composition may include the second siloxane-based resin, the cross-linking agent and the filler.

For example, in a state that the catalyst and the first siloxane-based resin are distributed in the main composition, the second siloxane-based resin may be mixed. Thus, the second siloxane-based resin may be introduced in the state where cross-linking points in the main composition are distributed, so that curing efficiency may be improved.

In some embodiments, the first siloxane-based resin may also be included in the cross-linking composition. A weight of the first siloxane-based resin included in the main composition may be greater than a weight of the first siloxane-based resin included in the cross-linking composition.

The filler may be divided and included in the main composition and the cross-linking composition. In an embodiment, a ratio of an amount of the filler included in the main composition to an amount of the filler included in the cross-linking composition may be in a range from 0.8 to 1.2, or from 0.85 to 1.15. In the above ratio range, heat conduction efficiency may be improved through uniform distribution of the filler.

As described above, the filler may include the thermally conductive inorganic particles, the hollow particles and the graphite particles, and the amino-silicon-based dispersant may be used to improve dispersibility of non-surface-treated particles. The amino-silicon-based dispersant may also be divided and included in the main composition and the cross-linking composition.

### <Battery Pack>

FIG. 1 is a schematic cross-sectional view illustrating a battery pack according to example embodiments.

Referring to FIG. 1, a battery pack 100 may include a battery module 110 and a support plate 130, and may include a gap filler 120 formed on the battery module 110 and the support plate 130.

The battery module 110 may include a plurality of battery cells 112. Each of the battery cells 112 may include an electrode assembly including a cathode and an anode alternately and repeatedly stacked. The cathode and the anode may be alternately and repeatedly stacked with a separator interposed therebetween. The cathode may include a lithium metal oxide as a cathode active material, and the battery cell 112 may be provided as a lithium secondary battery.

Each of the plurality of battery cells 112 may include a cathode lead and an anode lead, and the cathode leads and the anode leads may be merged with each other through a busbar to define the battery module 110.

The battery module 110 may be fixed on the support plate 130. The gap filler composition according to embodiments described above may be applied and cured between the battery module 110 and the support plate 130 to form the gap filler 120.

The battery module 110 may be stably fixed on the support plate 130 by the gap filler 120. As described above, the gap filler 120 may have stable curing properties and improved thermal conduction properties.

In example embodiments, the gap filler composition may have a low specific gravity and may maintain a target hardness range within a predetermined time range. Thus, stable hardness characteristics may be maintained without degrading overall electric vehicle process efficiency or increasing a weight of the battery pack.

Thus, the battery module 110 may have impact resistance and heat resistance for protecting the battery module 110 even under high temperature conditions, and may provide sufficient heat dissipation characteristics.

The gap filler 120 may be provided as a thermally conductive layer. For example, a thermal conductivity of the gap filler 120 may be greater than or equal to about 2.0 W/m·K. In an embodiment, the thermal conductivity of the gap filler 120 may be in a range from 2.20 W/m·K to 6.0 W/m·K, from 2.20 W/m·K to 6.0 W/m·K, or from 2.40 W/m·K to 5.0 W/m·K.

The thermal conductivity may be measured by a measuring apparatus and method according to an ISO 22007-2 standard.

Heat generated during a charging/discharging process of the battery pack may be quickly transferred to an outside in the above thermal conductivity range, and thus improving thermal stability of the battery pack.

In example embodiments, a height of the gap filler 120 in which the battery module 110 is seated may be in a range from 5.4 mm to 5.8 mm, or from 5.4 mm to 5.7 mm. In the above range, sufficient support stability for the battery module 110 may be provided, and sufficient heat conduction characteristics may be implemented. Additionally, generation of voids between the battery module 110 and the gap filler 120 due to excessive curing may be prevented.

Hereinafter, experimental examples including examples and comparative examples are presented to enhance the understanding of the present invention, but these are only examples the present invention, and are not intended to limit the scope of the attached claims. It is clear to those skilled in the art that various changes and modifications to examples can be implemented within the scope of the present invention and technical ideas, and that these changes and modifications are within the scope of the attached claims.

### Examples and Comparative Examples

Gap filler compositions were prepared according to components and contents (parts by weight) shown in Table 1 below.

Specifically, a first siloxane-based resin (vinyl-terminated siloxane resin) and a catalyst were included in a main composition. The first siloxane-based resin (vinyl-terminated siloxane resin) and a second siloxane-based resin (hydrogen-terminated siloxane resin) were included in the cross-linking composition. The first siloxane-based resin was divided and included in the main composition and the cross-linking composition in a weight ratio of about 2:1. A cross-linking agent having a hydrogen-terminated siloxane resin structure was further included in the cross-linking composition.

The thermally conductive inorganic particles, the hollow particles, the graphite particles and the amino-silicon-based dispersant were each divided and included in the main composition and the cross-linking composition in a weight ratio of 1:1.

The main composition and the cross-linking composition were prepared by including the components of Table 1 as described above in a paste mixer, mixing and stirring for 3 minutes at 600 rpm revolution/500 rpm rotation, and then degassing for 10 minutes at 1000 rpm revolution/100 rpm rotation in a vacuum state .

Table 2 below shows Examples in which contents of the resin, the catalyst, etc., were the same as those in Example 1, but average particle sizes of the hollow particles and graphite particles were different.

**[Table 1]**

| category | first siloxane based resin (A-1) | second siloxane based resin (B-1) | cross-linking agent (C-1) | dispersant | | thermally conductive inorganic particles (E-1) | hollow particles (F-1) | graphite particles (G-1) | catalyst (H-1) |
|---|---|---|---|---|---|---|---|---|---|
| | | | | D-1 | D-2 | | | | |
| Example 1 | 7.92 | 4.00 | 0.30 | 0.24 | - | 85.00 | 1.50 | 1.00 | 0.04 |
| Example 2 | 7.92 | 4.00 | 0.30 | 0.24 | - | 86.00 | 0.50 | 1.00 | 0.04 |
| Example 3 | 7.92 | 4.00 | 0.30 | 0.24 | - | 84.00 | 2.50 | 1.00 | 0.04 |
| Example 4 | 7.92 | 4.00 | 0.30 | 0.24 | - | 81.50 | 5.00 | 1.00 | 0.04 |
| Example 5 | 7.92 | 4.00 | 0.30 | 0.24 | - | 84.00 | 1.50 | 2.00 | 0.04 |
| Example 6 | 7.92 | 2.00 | 0.30 | 0.24 | - | 82.00 | 1.50 | 4.00 | 0.04 |
| Example 7 | 7.92 | 2.00 | 0.30 | 0.24 | - | 80.00 | 1.50 | 8.00 | 0.04 |
| Example 8 | 7.92 | 2.00 | 0.30 | 0.24 | - | 76.00 | 1.50 | 12.00 | 0.04 |
| Example 9 | 7.92 | 2.00 | 0.30 | 0.24 | - | 72.00 | 1.50 | 16.00 | 0.04 |
| Example 10 | 8.04 | 4.00 | 0.30 | 0.12 | - | 84.00 | 1.50 | 2.00 | 0.04 |
| Example 11 | 8.08 | 4.03 | 0.30 | 0.05 | - | 84.00 | 1.50 | 2.00 | 0.04 |
| Comparative Example 1 | 9.42 | 4.00 | 0.30 | 0.24 | - | 85.00 | - | 1.00 | 0.04 |
| Comparative example 2 | 9.42 | 4.00 | 0.30 | 0.24 | - | 84.00 | - | 2.00 | 0.04 |
| Comparative Example 3 | 9.42 | 3.70 | 0.30 | 0.24 | - | 85.00 | - | 1.30 | 0.04 |
| Comparative Example 4 | 8.04 | 2.90 | 0.26 | - | 0.26 | 85.00 | 1.50 | 2.00 | 0.04 |

Specific components shown in Table 1 are as follows.
A-1) first siloxane-based resin
polydimethylsiloxane resin treated with a vinyl group at both ends having a viscosity of 270 cps (see Chemical Formula 1)
B-1) second siloxane-based resin
polydimethylsiloxane resin with both ends hydrogenated having a viscosity of 500 cps (see Chemical Formula 2)
C-1) cross-linking agent
polydimethylsiloxane resin with both ends hydrogenated having a viscosity of 65 cps (see Chemical Formula 3)
D-1) amino-silicon-based dispersants (see General Formulae 1 and 2): amine value 36 mgKOH/g
D-2) silicone-based dispersant containing hydroxyl group (BYK 1799)
E-1) thermally conductive inorganic particles
aluminum hydroxide particles (D50: 5 µm)
F-1) hollow silica particles
density 0.35 g/cc, isostatic crush strength: 2,000 psi, average particle size (D50): 5 µm
G-1) graphite particles
spherical natural graphite (D50: 15 µm)
H-1) catalyst
Pt/Si₂O binding catalyst (Pt/(Si+O) weight ratio: 1.35)

**[Table 2]**

| category | average particle diameter of hollow particles (µm) | average particle diameter of graphite particles (µm) |
|---|---|---|
| Example 1-1 | 0.2 µm | 15 µm |
| Example 1-2 | 2 µm | |
| Example 1-3 | 10 µm | |
| Example 1-4 | 80 µm | |
| Example 1-5 | 5 µm | 2 µm |
| Example 1-6 | | 50 µm |
| Example 1-7 | | 200 µm |

The average particle sizes of the hollow particles and the graphite particles in Table 2 were measured using a particle size analyzer (Dynamic light scattering (DLS)).

### Experimental Example

### (1) Measurement of specific gravity

A gap filler composition was prepared by mixing the main composition and the cross-linking composition of Examples and Comparative Examples in a mass ratio of 1:1 using a two-component cartridge. The specific gravity of the gap filler composition was measured according to ASTM D792's Test Method A.

Specifically, a weight of each composition and a weight of the composition in water were measured according to the above standard, and then a specific gravity was calculated using the measured weight difference.

### (2) Measurement of thermal conductivity

The main composition and the cross-linking composition of Examples and Comparative Examples were mixed in a mass ratio of 1:1 using a two-component cartridge and cured to form a resin layer.

The thermal conductivity of the resin layer was measured using Hot Disk measuring equipment according to a standard of ISO 22007-2. Specifically, a resin layer having a width/length of 20 mm and a thickness of 6.0 mm was formed, and an average value was calculated after measuring three times.

### (3) Measurement of viscosity

A gap filler composition was prepared by mixing the main composition and crosslinking composition of Examples and Comparative Examples in a mass ratio of 1:1 using a two-component cartridge. A viscosity of the gap filler composition over time was measured using an Advanced Rheometric Expansion System (Brookfield, DV2T Rheometer) (Measurement conditions: 20 rpm / 25°C, Gap 5mm).

The evaluation results are shown in Table 3 below.

**[Table 3]**

| category | specific gravity | thermal conductivity (W/m·K) | viscosity (Pa·s) | | | | |
|---|---|---|---|---|---|---|---|
| | | | preparation day | after 1 day | after 2 days | after 3 days | after 4 days |
| Example 1 | 1.85 | 2.50 | 451 | 474 | 486 | 484 | 486 |
| Example 1-1 | 1.85 | 2.70 | 768 | 792 | 821 | 1033 | 1244 |
| Example 1-2 | 1.85 | 2.60 | 554 | 575 | 609 | 649 | 701 |
| Example 1-3 | 1.85 | 2.50 | 430 | 452 | 464 | 479 | 487 |
| Example 1-4 | 1.85 | 2.20 | 406 | 428 | 443 | 458 | 465 |
| Example 1-5 | 1.85 | 2.20 | 599 | 602 | 615 | 633 | 634 |
| Example 1-6 | 1.85 | 2.50 | 439 | 452 | 458 | 461 | 468 |
| Example 1-7 | 1.85 | 2.60 | 417 | 428 | 431 | 437 | 443 |
| Example 2 | 2.05 | 2.70 | 402 | 436 | 438 | 442 | 448 |
| Example 3 | 1.80 | 2.50 | 732 | 741 | 742 | 750 | 755 |
| Example 4 | 1.60 | 1.50 | 1035 | 1138 | 1246 | 1352 | 1455 |
| Example 5 | 1.85 | 2.70 | 492 | 509 | 520 | 522 | 524 |
| Example 6 | 1.85 | 3.20 | 636 | 654 | 665 | 675 | 673 |
| Example 7 | 1.85 | 3.80 | 656 | 673 | 689 | 684 | 683 |
| Example 8 | 1.85 | 4.00 | 732 | 742 | 749 | 750 | 748 |
| Example 9 | 1.85 | 4.50 | 1,252 | 1,311 | 1,358 | 1,419 | 1,466 |
| Example 10 | 1.85 | 2.70 | 546 | 568 | 622 | 658 | 667 |
| Example 11 | 1.85 | 2.70 | 876 | 858 | 1,340 | 1,586 | 1,953 |
| Comparative Example 1 | 2.00 | 2.40 | 351 | 378 | 380 | 383 | 389 |
| Comparative Example 2 | 2.00 | 2.80 | 406 | 422 | 428 | 434 | 436 |
| Comparative Example 3 | 2.00 | 2.30 | 388 | 402 | 413 | 420 | 424 |
| Comparative Example 4 | 1.85 | 2.70 | 1176 | 1356 | 1,540 | 1,995 | 1,956 |

Referring to Tables 1 and 2, in Examples including the thermally conductive inorganic particles, the hollow particles and the graphite particles, viscosity stability over time was provided while maintaining a low specific gravity of 3 or less, or less than 2.00 and 1.5 or more; and a thermal conductivity of 2.20 W/m·K or more, or in a range from 2.50 W/m·K to 4.50 W/m·K.

In Example 1-1 where the average particle size of the hollow particles was relatively small, an effective volume of the hollow particles in the composition was decreased, and the number of small-sized particles was increased. The thermal conductivity of the hollow particles was relatively low, and the thermal conductivity of the composition was increased in accordance with the above changes, but the viscosity was also increased.

In Example 1-4 where the average particle size of the hollow particles was relatively large, an effective volume of the hollow particles in the composition was increased, and the number of large-sized particles was increased. The thermal conductivity of the hollow particles was relatively low, and the viscosity of the composition was decreased in accordance with the above changes, but the thermal conductivity was also decreased.

In Example 1-5 where the average particle size of the graphite particles was relatively small, a volume of the graphite particles in the composition was substantially reduced, and the thermal conductivity of the composition was decreased.

In Example 1-7 where the average particle size of the graphite particles was relatively large, a volume occupied by the graphite particles in the composition was substantially increased, and the thermal conductivity of the composition was increased. However, due to a difference in average particle sizes between the graphite particles and the hollow particles, the particles were not easily blended to increase a time required for the preparation of the composition. Accordingly, production efficiency of the composition was degraded.

In Example 2 where the content of the hollow particles was relatively low, the specific gravity was relatively high compared to those from other Examples. In Example 4 where the content of hollow particles was relatively high, the thermal conductivity was relatively low compared to those from other Examples.

In Example 9 where the content of the graphite particles was relatively high, the viscosity of the composition was relatively high compared to those from other Examples.

In Example 11 where the content of the dispersant was relatively low, the initial viscosity and the viscosity change of the composition were high compared to those from other Examples.

In Comparative Examples 1 and 2 where the hollow particles were not included, the specific gravity was increased. In Comparative Example 3 where the graphite particles were not included, the thermal conductivity was decreased.

In Comparative Example 4 where a hydroxyl-silicon-based dispersant was used instead of the amino-silane-based dispersant, viscosity stability was significantly reduced due to side reactions with surfaces of the thermally conductive inorganic particles.

## Claims

1. A gap filler composition, comprising:
a siloxane-based resin;
a filler comprising thermally conductive inorganic particles, hollow particles, and graphite particles;
a catalyst; and
an amino-silicon-based dispersant.

2. The gap filler composition of claim 1, wherein an average particle diameter of the hollow particles is in a range from 1 µm to 60 µm.

3. The gap filler composition of claim 1, wherein an average particle diameter of the graphite particles is in a range from 10 µm to 150 µm.

4. The gap filler composition of claim 1, wherein the hollow particles include hollow silica particles.

5. The gap filler composition of claim 1, wherein a content of the hollow particles is in a range from 1 wt% to 5 wt% based on a total weight of the composition.

6. The gap filler composition of claim 1, wherein the graphite particles include spherical graphite.

7. The gap filler composition of claim 1, wherein a content of the graphite particles is in a range from 1 wt% to 16 wt% based on a total weight of the composition.

8. The gap filler composition of claim 1, wherein a content of the thermally conductive inorganic particles is in a range from 75 wt% to 95 wt% based on a total weight of the composition.

9. The gap filler composition of claim 1, wherein a content of the amino-silicon-based dispersant is in a range from 0.1 wt% to 3 wt% based on a total weight of the composition.

10. The gap filler composition of claim 1, wherein the siloxane-based resin comprises a first siloxane-based resin including an unsaturated end group and a second siloxane-based resin including a saturated end group.

11. The gap filler composition of claim 10, wherein the siloxane-based resin further comprises a cross-linking agent including a siloxane-based resin having a methyl group bonded to each of silicon atoms at both terminal ends.

12. The gap filler composition of claim 1, the composition has a specific gravity less than 2.

13. The gap filler composition of claim 1, the composition has a viscosity of 850 Pa·s or less at 25 °C.

14. A battery pack, comprising:
a plurality of battery modules;
a support plate; and
a gap filler formed using the gap filler composition of claim 1 between the battery modules and the support plate.
